(19) **Europäisches Patentamt / European Patent Office / Office européen des brevets**

(11) **EP 3 989 465 B1**

(12) **EUROPEAN PATENT SPECIFICATION**

(45) Date of publication and mention
of the grant of the patent:
**11.12.2024 Bulletin 2024/50**

(21) Application number: **20860945.3**

(22) Date of filing: **01.09.2020**

(51) International Patent Classification (IPC):
***H04L 1/00*** *(2006.01)*

(52) Cooperative Patent Classification (CPC):
**H04L 1/0035; H04L 1/0003; H04L 1/0009**

(86) International application number:
**PCT/CN2020/112843**

(87) International publication number:
**WO 2021/043131 (11.03.2021 Gazette 2021/10)**

(54) **ADAPTIVE MODULATION CONTROL METHOD AND APPARATUS, BASE STATION AND STORAGE MEDIUM**

VERFAHREN UND GERÄT ZUR ADAPTIVEN MODULATIONSSTEUERUNG, BASISSTATION UND SPEICHERMEDIUM

PROCÉDÉ ET APPAREIL DE COMMANDE DE MODULATION ADAPTATIVE, STATION DE BASE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2019 CN 201910824360**

(43) Date of publication of application:
**27.04.2022 Bulletin 2022/17**

(73) Proprietor: **ZTE Corporation**
**Shenzhen, Guangdong 518057 (CN)**

(72) Inventor: **LIU, Xuebin**
**Shenzhen, Guangdong 518057 (CN)**

(74) Representative: **Swindell & Pearson Limited**
**48 Friar Gate**
**Derby DE1 1GY (GB)**

(56) References cited:
WO-A1-2009/035382    WO-A1-2011/093756
WO-A1-2015/074073    WO-A1-2017/041207
WO-A1-2019/010697    CN-A- 102 638 294
CN-A- 103 427 885    CN-A- 105 873 101
US-A1- 2015 326 288

• HUAWEI; HISILICON: "Discussion on CQI/RI requirements for SU-MIMO", 3GPP DRAFT; R4-143563 DISCUSSION ON CQI AND RI REQUIREMENTS FOR SU-MIMO, vol. RAN WG4, 12 May 2014 (2014-05-12), Seoul, Korea, pages 1 - 4, XP050824376

EP 3 989 465 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The embodiments of the present disclosure relate to the field of communication, and in particular, to an adaptive modulation control method and apparatus, a base station and a storage medium.

### BACKGROUND

Adaptive modulation control (AMC) is a technology that has been used since 3G mobile communication, and includes inner-loop and outer-loop, where the inner-loop refers to a modulation and coding scheme (MCS) according to which the base station determines uplink and downlink signals of a terminal according to the channel conditions of the terminal, and the outer-loop refers to a MCS according to which the base station feeds back and adjusts a terminal based on the block error ratio (BLER) of signal transmission, to ensure that the real BLER of signal transmission is maintained near the target BLER.

In normal circumstances, factors such as whether a base station adopts a beamforming technology for a terminal, whether a terminal participates in space division multiplexing access (SDMA) and what space division group a terminal joins during SDMA will affect the inner-loop of the AMC. However, once the inner loop is changed, the base station must adjust the outer-loop. When the state of the terminal is changed frequently, for example, when the terminal is sometimes in a non-SDMA state and sometimes in an SDMA state, the base station will constantly adjust the outer-loop. As a result, the outer-loop of the AMC of the terminal is prone to violent fluctuation, the BLER and the MCS jump greatly, and even the BLER cannot be effectively maintained near the target BLER. In addition, the adjustment of the MCS of the terminal on the basis of the BLER has the characteristics of "fast drop and slow rise", and this fluctuation will inevitably cause a small MCS mean, resulting in obvious performance loss.

According to WO 2011093756A1, a method in a first network node for selecting a transport format among a plurality of available transport formats for communicating information with a second network node via a wireless link is disclosed. The method includes the steps of: obtaining a quality indicator, which quality indicator indicates the current channel quality of the wireless link; determining a throughput indicator, which throughput indicator indicates the throughput of at least a first transport format and a second transport format being available at the obtained quality indicator; calculating a switching value based on the quality indicator and the throughput indicator; switching to the second transport format when the quality indicator indicates that the switching value is reached or exceeded with respect to the second transport format; sending a notification to the second node, which notification indicates the switch to the second transport format. In this document, each transport format is assigned a respective target BLER.

According to WO 2009035382A1, a network node or a mobile terminal includes a transceiver which is adapted for transmitting data frames comprising data transport blocks and redundancy information, further includes a processing unit receiving at least one parameter value indicative of the quality of a radio channel and at least one message indicative of an actual block error rate for the transmitted data frame. The processing unit determines an expected block error probability for each transmitted data frame and adjusts the at least one received parameter value based on the difference between an at least one previously calculated block error probability and the actual block error rate.

### SUMMARY

The embodiments of the present disclosure provide an adaptive modulation control method and apparatus, a base station and a storage medium. The features of the method, the apparatus, the base station and the storage medium according to embodiments of the present disclosure are set out in the appended set of claims.

Other features and corresponding beneficial effects of the present disclosure will be described in the later part of the description, and it should be understood that at least some of the beneficial effects will become apparent from the description of the present disclosure.

### BRIEF DESCRIPTION OF DRAWINGS

FIG. 1 is a flowchart of an adaptive modulation control method according to Embodiment one of the present disclosure;
FIG. 2 is a flowchart of an adaptive modulation control method according to Example one of Embodiment two of the present disclosure;
FIG. 3 is a flowchart of an adaptive modulation control method according to Example two of Embodiment two of the present disclosure;

FIG. 4 is a schematic structural diagram of an adaptive modulation control apparatus according to Embodiment four of the present disclosure; and

Fig. 5 is a hardware structural diagram of a base station according to Embodiment four of the present disclosure.

## DETAILED DESCRIPTION

In order to make the objectives, technical schemes and advantages of the present disclosure clearer, the embodiments of the present disclosure will be further described in detail below by specific implementations in conjunction with the accompanying drawings. It should be understood that the embodiments to be described herein are merely for illustrating rather than limiting the present disclosure.

Embodiment one

Massive Multiple Input Multiple Output (MIMO) is one of core technologies of the 5th generation mobile communication (i. e., 5G). However, in the time division long term evolution (TD-LTE) systems of 4G, due to the reciprocity of time division duplexing (TDD) uplink and downlink channels, an eNB (base station) may estimate the characteristics of the downlink channel on the basis of a uplink sounding reference signal (SRS) from a user equipment (UE), thereby implementing the beamforming (BF) of downlink signals and obtaining a signal energy gain.

Based on BF, the space division multiplexing access (SDMA) among multiple UEs may be implemented, that is, multiple UEs share the same time-domain and frequency-domain resources under one eNB, so that the spectral efficiency and capacity of the eNB are improved. The space division multiplexing access of N UEs may be defined as space division N-stream (or space division N-layer). Since there are much more antennas in the Massive MIMO than those in the conventional 3G/4G MIMO, the beamforming gain and the SDMA capability are much higher, and the number N of space division streams is increased substantially. Since both BF and SRS are existing technologies in the 4G TD-LTE, the eNB in the TD-LTE system may achieve excellent communication performance by introducing the Massive MIMO technology.

In the AMC, on one hand, the base station adopts the BLER of signal transmission of the terminal as an outer-loop for adjusting a MCS of the terminal. For example, if the real BLER of signal transmission exceeds the preset target BLER, the base station may adjust the MCS of the terminal down; while if the real BLER of signal transmission is lower than the target BLER, the base station may adjust the MCS of the terminal up. On the other hand, the base station will control the MCS of the terminal by using the channel conditions such as signal interference noise ratio (SINR) of the terminal as an inner-loop policy of the AMC, that is, the following method is adopted.

Inner-loop policy determination method 1: the inner-loop policy of the AMC is determined by the SINR of the terminal.

However, this method of determining the inner-loop policy of the AMC is more suitable for a scenario where the terminal is neither in the SDMA mode nor in the beamforming mode. This is because the gain of beamforming (Gain-BF) needs to be taken into consideration during the determination of the inner-loop policy of the AMC of the terminal if the terminal is in the beamforming mode. Therefore, if the terminal is in the beamforming mode, the following method is adopted.

Inner-loop policy determination method 2: the inner-loop policy of the AMC is determined by the SINR and Gain-BF of the terminal.

However, when the terminal is in the SDMA state, the MCS of the terminal should not only consider the SINR and the Gain-BF, but also consider the power adjustment (ΔPower) caused by the SDMA and the inter-stream interference (Interf) between terminals in the same space division group in the SDMA state. Here, it is assumed that the space division group where the terminal is located is an N-stream space division group, the power adjustment ΔPower refers to a downlink SDMA and the fixed total power of the base station is distributed to N SDMA terminals. Therefore, the larger N is, the larger the ΔPower is; and the larger N is, the larger the Interf is. Therefore, when the terminal is in an N-stream space division group, the following method is adopted to determine the inner-loop policy of the AMC of the terminal.

Inner-loop policy determination method 3: the inner-loop policy of the AMC is determined by the SINR, Gain-BF, ΔPower and Interf of the terminal.

In the inner-loop policy determination method 3, the SINR and Gain-BF of the terminal are positively correlated with the MCS value, and the ΔPower and Interf are negatively correlated with the MCS value.

In some cases, the base station has one AMC inner-loop and one AMC outer-loop for each terminal, and the AMC outer-loop constantly feeds back and adjusts the MCS of the terminal so that the real BLER of the terminal is near the target BLER. However, since the real BLER of the terminal is affected by the signal transmission mode of the terminal, the real BLER will fluctuate violently when the terminal shuttles and jumps between different transmission modes. For this reason, the base station has to feedback and adjust the MCS of the terminal by using the AMC outer-loop, so that the MCS will fluctuate greatly, resulting in the decrease of the MCS mean and the performance loss of the terminal.

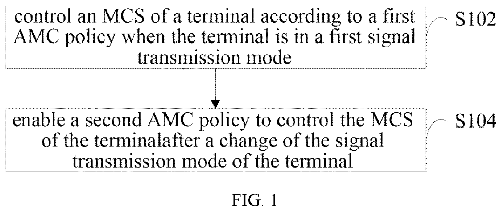

In view of this, this embodiment provides an adaptive modulation control method, referring to the flowchart of FIG. 1, including the following steps.

At step S102, when a terminal is in a first signal transmission mode, an MCS of the terminal is controlled according to a first AMC policy.

In one claimed embodiment, the signal transmission mode of the terminal is distinguished according to such factors: whether the base station performs beamforming on the terminal, whether the base station performs SDMA on the terminal, and the space division group where the terminal is located. Therefore, depending on whether the base station performs beamforming on the terminal, the signal transmission mode of the terminal may be classified into a beamforming mode and a non-beamforming mode. Depending on whether the base station performs SDMA on the terminal, the signal transmission mode of the terminal may be classified into a SDMA mode and a non-SDMA mode. Depending on the space division group, for different space division groups where the terminal is located, the current signal transmission mode of the terminal may be different. It should be noted that, in some examples, for different space division groups where the terminal is located, the current signal transmission mode of the terminal is different. However, in some other examples of this embodiment, it is possible that two or more space division groups correspond to a same signal transmission mode. For example, when the terminal is in a 2-stream space division group or a 3-stream space division group, it is in one signal transmission mode; and when the terminal is in a 4-stream space division group, a 5-stream space division group or a 6-stream space division group, it is in another signal transmission mode.

In this embodiment, the "first signal transmission mode" and the "second signal transmission mode" do not refer to one of the above signal transmission modes, and are used to distinguish the transmission modes used by the terminal before and after a signal transmission mode switchover. The first signal transmission mode refers to the signal transmission mode used by the terminal before one signal transmission mode switchover, and the second signal transmission mode refers to the signal transmission mode used by the terminal after this signal transmission mode switchover. Therefore, in some examples of this embodiment, the first signal transmission mode may refer to a non-beamforming mode, and the second signal transmission mode may refer to an SDMA mode; while in some other examples, the first signal transmission mode refers to an SDMA mode under a 3-stream space division group, and the second signal transmission mode refers to an SDMA mode under a 2-stream space division group.

Although the "first signal transmission mode" and the "second signal transmission mode" have no specific meanings, in this embodiment, the "first AMC policy" refers to the AMC policy corresponding to the first signal transmission mode, and the "second AMC policy" also refers to the AMC policy corresponding to the second signal transmission mode. In this embodiment, the outer-loop policy of the first AMC policy is determined on the basis of the first target BLER, and the outer-loop policy of the second AMC policy is determined on the basis of the second target BLER. The two target BLERs are independent of each other and do not affect each other. In some examples of this embodiment, the first BLER and the second BLER may have different values.

When the terminal is in the first signal transmission mode, the base station uses the first AMC policy corresponding to the first signal transmission mode to control the MCS of the terminal.

At step S104, after a change of the signal transmission mode of the terminal, a second AMC policy conforming to a second signal transmission mode after the change is enabled to control the MCS of the terminal.

The base station may monitor the signal transmission mode of the terminal to determine whether the signal transmission mode of the terminal is changed. If the base station determines that the signal transmission mode of the terminal is changed, the second AMC policy conforming to the changed signal transmission mode may be enabled to control the MCS. Since the second target BLER in the outer-loop policy of the second AMC policy and the first target BLER in the outer-loop policy of the first AMC policy are independent of each other, and compared with the first BLER, the second BLER is more suitable for the current signal transmission mode of the terminal. Since the target BLER is changed, the management of the MCS of the terminal by the base station may be smoothly transited although the signal transmission of the terminal is changed. Thus, it is unnecessary to make substantial adjustment on the basis of the first target BLER, and the problem of "cliff-like" reduction of the MCS mean of the terminal is avoided.

In some examples of this embodiment, while enabling the second AMC policy to control the MCS of the terminal, the base station will also suspend the first AMC policy and enable a failure timer corresponding to the first AMC policy. Subsequently, the failure timer corresponding to the first AMC policy starts timing. If the signal transmission mode of the terminal returns to the first signal transmission mode before the failure timer expires, the base station may continuously enable the previously suspended first AMC policy to manage the MCS of the terminal. When the signal transmission mode of the terminal is restored to the first signal transmission mode, the base station may reset the failure timer corresponding to the first AMC policy. If the signal transmission mode of the terminal is yet not restored to the first signal transmission mode until the failure timer expires, the base station may terminate the suspended first AMC policy.

In this embodiment, for different AMC policies, the base station may set different durations for corresponding failure timers. For example, for the AMC policy used by the terminal when it is neither in the beamforming mode nor in the SDMA mode, the base station may set a relatively large duration for the corresponding failure timer; and for the AMC policy used by the terminal in a certain 6-stream space division group, the base station may set a relatively small duration for the corresponding failure timer. In the former case, the terminal is more likely to return to the signal transmission mode once it leaves this signal transmission mode, so the base station may set a relatively large duration for the failure timer, to provide more opportunities for the terminal to continuously use this AMC policy. However, after the terminal leaves a 6-stream space division group, it is less likely to return to this space division group, so the base station may set a relatively small duration for the failure timer.

It should be noted that, the foregoing terminal may be a real terminal. That is, the foregoing terminal may be a UE. In this case, the change of the signal transmission mode of the terminal may be any one of the following:

1) the signal transmission mode of the real terminal is switched between a non-beamforming mode and a beamforming mode;
2) the signal transmission mode of the real terminal is switched between a non-SDMA mode and an SDMA mode; and
3) the real terminal exits from one space division group and joins another space division group.

For a single UE, on the basis of the above three aspects, the base station may determine whether the signal transmission mode of the UE is changed.

In another claimed embodiment, the terminal is a virtual terminal formed by all terminals in an N-stream space division group as a whole. There is no doubt that the value of N is greater than or equal to 2. For a virtual terminal, the base station may use an AMC management policy to manage the MCS of the virtual terminal just like a real terminal. It should be understood that one virtual terminal has one AMC policy at the same moment and this AMC policy is actually shared by all real terminals forming this virtual terminal. That is, for N real terminals in an N-stream space division group, the base station will use a same AMC policy to manage the MCSs of these real terminals. It can be known that, like the AMC policy of the real terminal, the AMC policy of the virtual terminal includes an inner-loop policy and an outer-loop policy. For the inner-loop policy, the reason why terminals belonging to the same N-stream space division group will be controlled by the base station to enter an SDMA state is that the N terminals have similar channel conditions. Therefore, during the determination of the inner-loop policy of the AMC policy of the virtual terminal, the base station may directly depend on the above inner-loop policy determination method 3. For the outer-loop policy, the base station may determine the outer-loop policy according to the real BLER mean of the virtual terminal. The "real BLER mean" refers to a mean value of real BLERs of the terminals in the N-stream space division group. For example, it is assumed that a virtual terminal consists of 3 terminals, the base station may determine the real BLER mean on the basis of the feedback from the three terminals.

For a virtual terminal, the change of the signal transmission mode of the terminal may be any one of the following:

1) The number N of streams in the N-stream space division group is changed. For example, the number of terminals in a space division group is increased or decreased.

2) The number N of streams in the N-stream space division group is not changed, but the number of terminals changed in the N-stream space division group reaches a preset change ratio. For example, the value of N is 6. Although the number N of streams in the space division group is always 6 at the moment t2 in comparison to the moment t1, the terminals in the space division group are a, b, c, d, e and f at the moment t1, while the terminals in the space division group are changed into a, b, c, k, h and g at the moment t2. The change ratio reaches 50%, which exceeds the preset change ratio of 25%. Thus, the base station may determine that the signal transmission mode of the virtual terminal is changed.

For the base station, when the inner-loop policy in the AMC policy is determined by the above inner-loop policy determination method 3, if the number of streams in the space division group is determined, the corresponding inter-stream interference Interf may be determined according to the number N of streams. The inter-stream interference may be set according to empirical values. For example, empirical values is selected based on a lot of tests or the like. However, the inter-stream interference determined in this way is not necessarily accurate because different base stations have different situations. Even in the same base station, the inter-stream interference suffering the terminal in space division spaces having the same number N of streams in different regions is not exactly the same. Therefore, this embodiment provides a scheme for determining the accuracy of inter-stream interference in the inner-loop policy.

The base station may feedback and adjust the inter-stream interference on the basis of the real BLER mean $BLER_{real}$ and the target BLER $BLER_{target}$ of the virtual terminal when it uses an AMC policy to manage to the MCS of each real terminal in the virtual terminal. For example, the base station estimates the inter-stream interference at the current moment according to the real BLER mean $BLER_{real}$ of the virtual terminal at the current moment and the target BLER $BLER_{target}$ corresponding to the AMC policy used by the virtual terminal. The estimated inter-stream interference will act on the inner-loop policy in the AMC policy of the virtual terminal at the next moment, thereby affecting the real BLER mean of the virtual terminal at the next moment. In turn, the real BLER mean of the virtual terminal at the next moment will be used to feedback and correct the inter-stream interference at the subsequent moment. By such cyclic iteration, the estimated inter-stream interference continuously approaches and converges toward its real value. In some embodiments, the base station may correct the inter-stream interference by the following formula:

$$\text{Interf}_{\text{SDMA-N}}(n + 1) = \text{Interf}_{\text{SDMA-N}}(n) + \rho \cdot \left(\text{BLER}_{\text{real}} - \text{BLER}_{\text{target}}\right),$$

where $\text{Interf}_{\text{SDMA-N}}(n+1)$ denotes the inter-stream interference at the next moment, $\text{Interf}_{\text{SDMA-N}}(n)$ denotes the inter-stream interference at the current moment, $\text{BLER}_{\text{real}}$ denotes the real BLER mean of the virtual terminal, $\text{BLER}_{\text{target}}$ denotes the target BLER of the AMC policy, and $\rho$ denotes an adjustment step factor and has a value range of $0 < \rho \leq 1$.

It can be known from the formula that, if the $\text{BLER}_{\text{real}}$ is greater than the $\text{BLER}_{\text{target}}$, it indicates that the current BLER of the virtual terminal is higher than expected, which may be caused by the underestimation of the inter-stream interference $\text{Interf}_{\text{SDMA-N}}(n)$. Therefore, it is necessary to increase the inter-stream interference $\text{Interf}_{\text{SDMA-N}}(n+1)$ at the next moment. Thus, the inter-stream interference $\text{Interf}_{\text{SDMA-N}}(n+1)$ at the next moment will be increased in comparison to the inter-stream interference $\text{Interf}_{\text{SDMA-N}}(n)$ at the current moment. If the $\text{BLER}_{\text{real}}$ is less than the $\text{BLER}_{\text{target}}$, it indicates that the current BLER of the virtual terminal is lower than expected, and the previous estimation of the inter-stream interference $\text{Interf}_{\text{SDMA-N}}(n)$ may be slightly higher. Therefore, it is necessary to reduce the inter-stream interference $\text{Interf}_{\text{SDMA-N}}(n+1)$ at the next moment. Thus, the inter-stream interference $\text{Interf}_{\text{SDMA-N}}(n+1)$ at the next moment will be decreased in comparison to the inter-stream interference $\text{Interf}_{\text{SDMA-N}}(n)$ at the current moment.

It should be understood that the granularity of each adjustment will be larger if the $\rho$ is larger. Therefore, if the $\rho$ has a higher value, the inter-stream interference of the virtual terminal will converge quickly in the initial stage of correction, but it will be difficult for the terminal to really converge the inter-stream interference to its real value, that is, the convergence accuracy is low. On the contrary, if the $\rho$ has a lower value, although the inter-stream interference of the virtual terminal may be closer to its real value after multiple corrections in comparison to the case of setting a larger value of $\rho$, since the granularity of each adjustment is very small, the correction process lasts for a long time, that is, the convergence speed of the inter-stream interference is low. In some examples of this embodiment, the base station may set a suitable value of $\rho$ based on empirical values. However, in some other examples of this embodiment, in the process of correcting the inter-stream interference in an AMC policy, the base station may constantly adjust the value of $\rho$. For example, the value of $\rho$ is set to be relatively large in the early stage of correction in order to quicken convergence; while the value of $\rho$ is decreased in the later stage of correction in order to achieve higher convergence accuracy.

In the adaptive modulation control method according to this embodiment of the present disclosure, when a terminal is in different signal transmission modes, a base station no longer uses a unified and fixed outer-loop policy to determine the MCS of the terminal. Instead, the base station flexibly switches the outer-loop policy according to the current signal transmission mode of the terminal. In addition, after switching the AMC policy, the base station will continue to keep the AMC policy used before the signal transmission mode switchover for a period of time, so that an opportunity to switch back to the original signal transmission mode is provided to the terminal Therefore, the problem of affecting transmission performance since the terminal needs to newly enable the corresponding AMC policy after each signal transmission mode switchover is avoided.

On the other hand, the base station may consider terminals in one space division group as a whole and manage the MCSs of the terminals in this space division group under the concept of a virtual terminal, so that the management overhead of the base station may be reduced, and it is advantageous for the optimal configuration of resources.

Moreover, when the base station uses an AMC policy to manage the MCS of the virtual terminal, the base station may correct the inter-stream interference of the inner-loop policy in this AMC policy on the basis of the real BLER mean of the virtual terminal and the target BLER corresponding to this AMC policy, thereby improving the accuracy of controlling the MCS of the virtual terminal by the base station, and enhancing the MCS performance.

Embodiment two:

In order to make a person having ordinary skills in the art more clearly understand the advantages and details of the adaptive modulation control method described above, further description will be given in this embodiment by examples.

Example one:

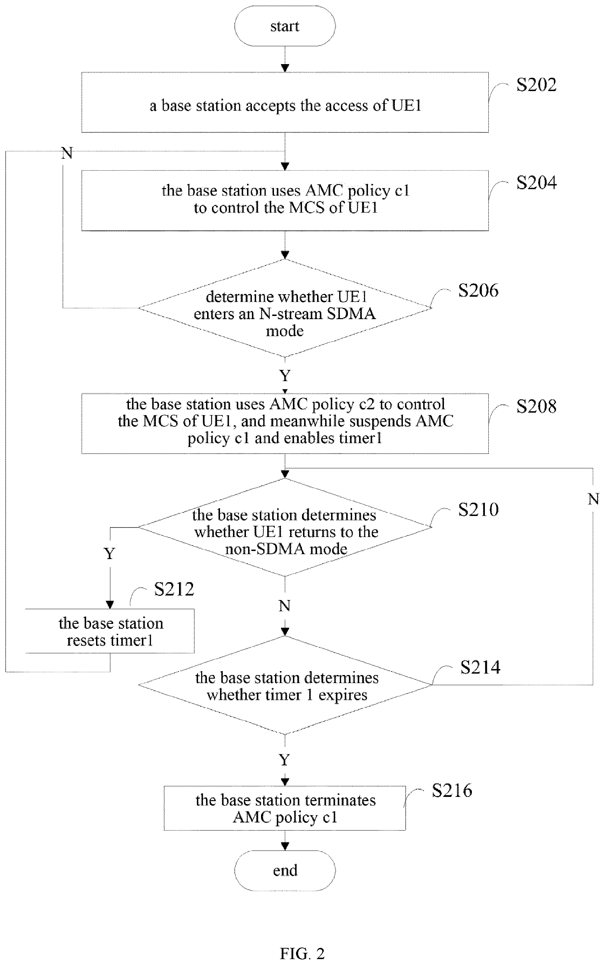

It is assumed that UE1 just accesses a base station and is in a non-SDMA mode during initial access. Meanwhile, it is assumed that the AMC policy used by UE1 in the non-SDMA mode is AMC policy c1 and the failure timer corresponding to the AMC policy c1 is timer1. The flowchart is shown in FIG. 2, including the following steps.

At step S202, a base station accepts the access of UE1.

At step S204, the base station uses AMC policy c1 to control the MCS of UE1.

At step S206, the base station determines whether UE1 enters an N-stream SDMA mode.

If the result of determination is YES, the process proceeds to step S208; otherwise, step S204 will be continuously executed.

At step S208, the base station uses AMC policy c2 to control the MCS of UE1, and meanwhile suspends the AMC policy c1 and enables timer1.

In this embodiment, it is assumed that the AMC policy c corresponding to the N-stream SDMA mode is AMC policy c2, and the failure timer corresponding to the AMC policy c2 is timer2.

At step S210, the base station determines whether UE1 returns to the non-SDMA mode.

If the result of determination is YES, the process proceeds to step S212; and if the result of determination is NO, the process proceeds to S214.

At step S212, the base station resets timer1.

At step S214, the base station determines whether timer! expires.

If the result of determination is YES, the process proceeds to step S216; otherwise, step S210 will be continuously executed.

At step S216, the base station terminates the AMC policy c1.

Example two:

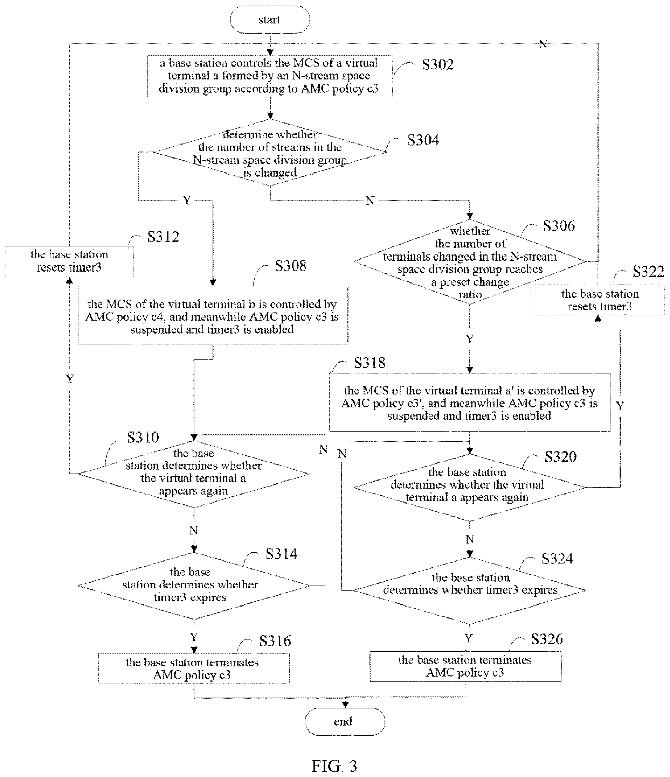

It is assumed that N terminals in an N-stream space division group form a virtual terminal a, the AMC policy used by this virtual terminal a is AMC policy c3, and the failure timer corresponding to the AMC policy c3 is timer3. The flowchart is shown in FIG. 3, including the following steps.

At step S302, a base station controls the MCS of a virtual terminal a formed by an N-stream space division group according to AMC policy c3.

At step S304, the base station determines whether the number of streams in the N-stream space division group is changed.

If the result of determination is YES, the process proceeds to step S308; otherwise, the process proceeds to step S306.

At step S306, the base station determines whether the number of terminals changed in the N-stream space division group reaches a preset change ratio.

If the result of determination is YES, the process proceeds to step S318; otherwise, step S302 will be continuously executed.

At step S308, the base station uses AMC policy c4 to control the MCS of a virtual terminal b, and meanwhile suspends the AMC policy c3 and enables timer3.

It is assumed that the N-stream space division group becomes an M-stream space division group after the number N of streams in the N-stream space division group is increased or decreased, and the virtual terminal formed by the M-stream space division group is a virtual terminal b. The AMC policy used by the virtual terminal b is AMC policy c4, and it is assumed that the failure timer corresponding to the AMC policy c4 is timer4.

At step S310, the base station determines whether the virtual terminal a appears again.

If the result of determination is YES, the process proceeds to step S312; and if the result of determination is NO, the process proceeds to step S314.

At step S312, the base station resets timer3.

At step S314, the base station determines whether timer3 expires.

If the result of determination is YES, the process proceeds to step S316; otherwise, step S310 will be continuously executed.

At step S316, the base station terminates the AMC policy c3.

At step S318, the base station uses AMC policy c3' to control the MCS of a virtual terminal a', and meanwhile suspends the AMC policy c3 and enables timer3.

It is assumed that the space division group formed by terminals changed in the original N-stream space division group is still an N-stream space division group, but this N-stream space division group is not exactly the same as the original N-stream space division group. The virtual terminal formed by the new N-stream space division group is a virtual terminal a'. The AMC policy used by the virtual terminal a' is AMC policy c3'. Meanwhile, it is assumed that the failure timer corresponding to the AMC policy c3' is timer3'.

At step S320, the base station determines whether the virtual terminal a appears again.

If the result of determination is YES, the process proceeds to step S322; and if the result of determination is NO, the process proceeds to step S324.

At step S322, the base station resets timer3.

At step S324, the base station determines whether timer3 expires.

If the result of determination is YES, the process proceeds to step S326; otherwise, step S320 will be continuously executed.

At step S326, the base station terminates the AMC policy c3.

Embodiment three:

The adaptive modulation control method described above will be continuously described in this embodiment.

Example one:

It is assumed there are 3 UEs under an eNB, i.e., UE1, UE2 and UE3, respectively. The three UEs are all in a non-SDMA state at the beginning, and the UEs have respective AMC policies, i.e., AMC1-1, AMC1-2 and AMC1-3, respectively.

At moment T1, UE2 and UE3 form a 2-stream space division group so as to form a virtual terminal a. For this virtual terminal a, the eNB will enable a new AMC policy, for example, AMC2-1, while AMC1-2 and AMC1-3 of UE2 and UE3 are suspended and the failure timer Timer1 is activated. It is assumed that the timing duration of the Timer 1 is 5 seconds. If UE2 and UE3 do not return to the non-SDMA mode before the failure timer Timer1 expires, AMC1-2 and AMC1-3 will be terminated. Subsequently, if UE2 and UE3 return to the non-SDMA mode, the eNB needs to enable a new AMC policy.

Example two:

It is assumed there are 5 UEs under an eNB, i.e., UE1, UE2, UE3, UE4 and UE5, respectively. The five UEs are all in a non-SDMA state at the beginning, and the UEs have respective AMC policies, i.e., AMC1-1, AMC1-2, AMC1-3, AMC1-4 and AMC1-5, respectively.

At moment T1, UE2, UE3, UE4 and UE5 form a 4-stream space division group to form a virtual terminal b. AMC1-2, AMC1-3, AMC1-4 and AMC1-5 are suspended, and the eNB will enable a failure timer Timer1. It is assumed that the timing duration of the Timer1 is 5 seconds. If a certain UE does not return to the non-SDMA state before the Timer1 expires, the AMC policy will be terminated. For the virtual terminal b, the eNB will enable a new AMC4-1 policy.

At moment T2, if the state of the 4-stream space division group is changed and UE1 also joins this space division group, the 4-stream space division group becomes a 5-stream space division group, and this 5-stream space division group forms a virtual terminal c. The AMC4-1 policy used by the virtual terminal b will be suspended by the eNB. Meanwhile, the eNB will also enable a failure timer Timer2. The duration of the Timer2 may be set to be 1 second. Before the Timer2 expires, if the 5-stream space division group is restored to a 4-stream space division group, and a certain proportion of terminals are terminals in the original 4-stream space division group, the AMC4-1 policy will be restored; otherwise, the AMC4-1 policy will be terminated.

For the virtual terminal c, the eNB will enable a new AMC policy AMC5-1, which is also determined by the inner-loop policy determination method 3 in the above embodiment. In the process of using the AMC5-1, the eNB will adjust the outer-loop of the MCS of the virtual terminal c according to the difference between the real BLER and the target BLER.

Example three:

It is assumed there are 6 UEs under an eNB, i.e. UE1, UE2, UE3, UE4, UE5 and UE6, respectively. The six UEs are all in a non-SDMA state at the beginning, and the UEs have respective AMC policies, i.e., AMC1-1, AMC1-2, AMC1-3, 1MC1-4, AMC1-5 and AMC1-6, respectively.

At moment T1, UE3, UE4, UE5 and UE6 form a 4-stream space division group, which will be regarded as a virtual terminal 1 by the eNB. AMC1-3, AMC1-4, AMC1-4 and AMC1-6 will be suspended by the eNB. Meanwhile, the eNB will also enable a failure timer Timer1. The duration of the Timer! is set to be 5 seconds. If a certain UE does not return to the non-SDMA state before the Timer1 expires, the AMC1 policy of this UE will be terminated.

For the virtual terminal 1, the eNB will enable a new AMC policy which is assumed as AMC4-1. At moment T2, if the state of the 4-stream space division group is changed, for example, UE3 exits this space division group, and UE1 joins this space division group. That is, this 4-stream space division group is still a 4-stream space division group. The change ratio of UEs in this space division group is 1/4. It is also assumed that the preset change ratio is 1/2. Therefore, the ratio of UEs changed in the 4-stream space division group does not reach the preset change ratio, the AMC4-1 will not be suspended or terminated, and will be run continuously.

If UE3 and UE4 exit the 4-stream space division group at moment T2, and UE1 and UE2 join this space division group, the 4-stream space division group is still a 4-stream space division group, but the change ratio of UEs in this space division group is 2/4, which already reaches the preset change ratio. Therefore, the eNB will terminate the AMC4-1, and enables a new AMC policy AMC4-2 to manage the MCSs of UEs in the new 4-stream space division group. The inner-loop policy of the AMC4-2 is also determined by the inner-loop policy determination method 3 in the above embodiment. In the process of using the AMC4-2, the eNB will adjust the outer-loop of the MCSs of UEs in the new 4-stream space division group according to the difference between the real BLER and the target BLER.

Embodiment four:

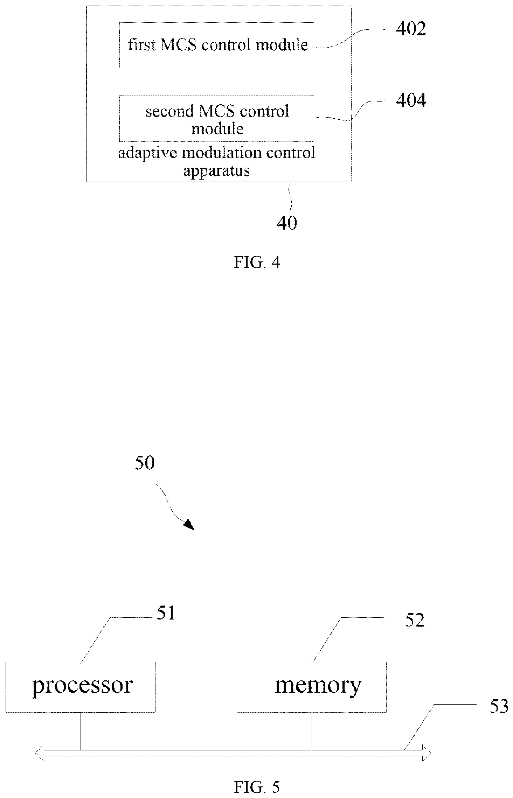

This embodiment provides an adaptive modulation control apparatus. FIG. 4 shows a schematic structure diagram of the adaptive modulation control apparatus.

The adaptive modulation control apparatus 40 includes a first MCS control module 402 and a second MCS control module 404. The first MCS control module 402 is configured to control an MCS of a terminal according to a first AMC policy when the terminal is in a first signal transmission mode, where an outer-loop policy of the first AMC policy is determined on the basis of a first target BLER. The second MCS control module 404 is configured to enable, after a change of the signal transmission mode of the terminal, a second AMC policy conforming to a second signal transmission mode after the change to control the MCS of the terminal, where an outer-loop policy of the second AMC policy is determined on the basis of a second target BLER.

The adaptive modulation control apparatus 40 may implement the adaptive modulation control method described in the above embodiments. For the details of implementing the adaptive modulation control method by the adaptive modulation control apparatus 40, please refer to the description of the above embodiments, which will not be repeated here.

The adaptive modulation control apparatus 40 in this embodiment may be deployed on a base station. The functions of the first MCS control module 402 and the second MCS control module 404 in the adaptive modulation control apparatus 40 may be jointly implemented by a processor and a communication unit of the base station.

This embodiment further provides a storage medium including a volatile or non-volatile and moveable or non-moveable medium implemented in any method or technology configured to store information (such as computer-readable instruction, data structure, computer program module or other data). The storage medium includes, but not limited to, random access memory (RAM), read-only memory (ROM), electrically erasable programmable read only memory (EEPROM), flash memory or other memory technologies, compact disc read-only memory (CD-ROM), digital versatile disk (DVD) or other optical disk memories, magnetic cassette, magnetic tape, magnetic disk memory or other magnetic memory devices, or any other mediums that may be configured to store desired information and may be accessed by computers.

The storage medium in this embodiment may store one or more computer programs that may be read, compiled and executed by one or more processors. In this embodiment, the storage medium may store an adaptive modulation control program that may be executed by one or more processors to implement the flow of any one of the adaptive modulation control methods described in the above embodiments.

This embodiment further provides a computer program (or called computer software), which may be distributed on a storage medium and may be executed by a computing apparatus to implement the flow of any one of the adaptive modulation control methods described in the above embodiments. In addition, in some cases, at least one step may be executed in an order different from that shown or described in the above embodiments.

This embodiment further provides a computer program product including a computer-readable apparatus storing the above-described computer program. The computer-readable apparatus in this embodiment may include the storage medium described above.

In addition, this embodiment provides a base station. As shown in FIG. 5, the base station 50 includes a processor 51, a memory 52 and a communication bus 53 configured to connect the processor 51 and the memory 52. The memory 52 may be the storage medium storing an adaptive modulation control program described above. The processor 51 may read, compile and execute the adaptive modulation control program to implement the flow of the adaptive modulation control method described in the above embodiments.

When a terminal is in a first signal transmission mode, the processor 51 controls the MCS of the terminal according to a first AMC policy, where an outer-loop policy of the first AMC policy is determined on the basis of a first target BLER. After a change of the signal transmission mode of the terminal, the processor 51 enables a second AMC policy conforming a second signal transmission mode after the change to control the MCS of the terminal, where an outer-loop policy of the second AMC policy is determined on the basis of a second target BLER.

After the signal transmission mode of the terminal is changed, the processor 51 will suspend the first AMC policy and enable a failure timer corresponding to the first AMC policy. If the signal transmission mode of the terminal is restored to the first signal transmission mode before the failure timer expires, the processor 51 will re-enable the first AMC policy to control the MCS of the terminal and reset the failure timer.

If the signal transmission mode of the terminal is yet not restored to the first signal transmission mode until the failure timer expires, the processor 51 terminates the first AMC policy.

In some examples of this embodiment, the terminal is a real terminal. The processor 51 determines that the change of the signal transmission mode of the terminal includes any one of the following.

The processor 51 determines that the signal transmission mode of the real terminal is switched between a non-beamforming mode and a beamforming mode.

The processor 51 determines that the signal transmission mode of the real terminal is switched between a non-SDMA mode and an SDMA mode.

The processor 51 determines that the real terminal exits from one space division group and joins another space division group.

In some other examples of this embodiment, the terminal is a virtual terminal formed by all terminals in an N-stream space division group as a whole, where N is greater than or equal to 2. The AMC policy corresponding to the virtual terminal is shared by the terminals in the N-stream space division group.

In this case, the processor 51 determines that the change of the signal transmission mode of the terminal includes any one of the following.

The processor 51 determines that the number N of streams in the N-stream space division group is changed.

The processor 51 determines that the number N of streams in the N-stream space division group is not changed but the number of terminals changed in the N-stream space division group reaches a preset change ratio.

In some examples of this embodiment, the AMC policy corresponding to the virtual terminal is determined on the basis of the real BLER mean of the virtual terminal. The real BLER mean is a mean value of BLERs of the terminals in the N-stream space division group.

In some embodiments, for the AMC policy corresponding to the virtual terminal, the processor 51 may further acquire the real BLER mean of the virtual terminal at a current moment n, and then correct the inter-stream interference used in the inner-loop policy of the AMC policy at a next moment n+1 on the basis of the real BLER mean and the target BLER of the AMC policy.

In some examples of this embodiment, the processor 51 may correct the inter-stream interference used in the inner-loop policy of the AMC policy at the next moment according to the following formula:

$$\text{Interf}_{\text{SDMA}-\text{N}}(n+1) = \text{Interf}_{\text{SDMA}-\text{N}}(n) + \rho \cdot \left(\text{BLER}_{\text{real}} - \text{BLER}_{\text{target}}\right),$$

where $\text{Interf}_{\text{SDMA-N}}(n+1)$ denotes the inter-stream interference at the next moment, $\text{Interf}_{\text{SDMA-N}}(n)$ denotes the inter-stream interference at the current moment, $\text{BLER}_{\text{real}}$ denotes the real BLER mean, the $\text{BLER}_{\text{target}}$ denotes the target BLER of the AMC policy, and $\rho$ denotes an adjustment step factor and has a value range of $0<\rho<1$.

In the base station according to this embodiment, in a scenario where the signal transmission mode of a terminal is changed, the MCS of the terminal is no longer controlled according to a unified outer-loop policy; instead, a second AMC policy adapted to the current situation is selected according to the current signal transmission mode of the terminal. The MCS of the terminal is adjusted according to the outer-loop policy in the second AMC policy. Thus, the problem that a base station substantially adjusts the MCS of the terminal on the basis of the unified outer-loop policy after the signal transmission mode of the terminal is changed, and it is advantageous to increase the MCS mean of the terminal, enhance the performance of signal transmission between the base station and the terminal, and improve the utilization of communication resources.

Apparently, it should be understood by a person having ordinary skills in the art that all or some of the steps in the methods disclosed above and the functional modules/units in the systems and apparatuses disclosed above may be implemented as software (which may be implemented by program codes executable by a computing apparatus), firmware, hardware and a suitable combination thereof. In the hardware implementation, the division of the functional modules/units mentioned above does not necessarily correspond to the division of physical components. For example, one physical component may have multiple functions, or one function or step may be cooperatively executed by a number of physical components. Some or all of the physical components may be implemented as software executed by a processor such as central processor, digital signal processor or microprocessor, or implemented as hardware, or implemented as integrated circuit such as an application-specific integrated circuit. Such software may be distributed on a computer-readable medium and executed by a computing apparatus. In addition, in some cases, the steps shown or described may be executed in an order different from the order described herein. The computer-readable medium may include a computer storage medium (or a non-temporary medium) and a communication medium (or a temporary medium). As is well-known to a person having ordinary skills in the art, the term computer storage medium includes volatile or non-volatile and removable or non-removable mediums implemented in any method or technology configured to store information (e. g., computer-readable instruction, data structure, program module or other data). The computer storage medium includes, but not limited to, RAM, ROM, EEPROM, flash memory or other memory technology, CD-ROM, a digital video disk (DVD) or other optical disk storages, magnetic cassette, magnetic tape, magnetic disk storage or other magnetic storage devices, or any other mediums which may be configured to store desired information and may be accessed by a computer. In addition, as is well-known to a person having ordinary skills in the art, the communication medium generally contains a computer-readable instruction, data structure, program module or other data in a modulation data signal such as a carrier or other transmission mechanisms, and may include any information transfer medium. Therefore, the present disclosure is not limited to any particular combination of hardware and software.

In the adaptive modulation control method and apparatus, the base station and the storage medium according to the embodiments of the present disclosure, when a terminal is in a first signal transmission mode, the MCS of the terminal is controlled according to an outer-loop policy of a first AMC policy that is determined on the basis of a first target BLER. After the signal transmission mode of the terminal is changed, a second AMC policy conforming to a second signal transmission mode after the change is enabled to control the MCS of the terminal, where an outer-loop policy of the second AMC policy is determined on the basis of a second BLER. Therefore, in the adaptive modulation control schemes according to the embodiments of the present disclosure, in a scenario where the signal transmission mode of the terminal is changed, the base station no longer controls the MCS of the terminal according to a unified outer-loop policy; instead, the base station selects, according to the current signal transmission mode of the terminal, a second AMC policy adapted to the current scenario, and adjusts the MCS of the terminal according to an outer-loop policy in the second AMC policy. Thus, the problem that a base station substantially adjusts the MCS of the terminal on the basis of the unified outer-loop policy after the signal transmission mode of the terminal is changed, and it is advantageous to increase the MCS mean of the terminal, enhance the performance of signal transmission between the base station and the terminal, and improve the utilization of communication resources.

The foregoing description merely shows the further detailed description of the embodiments of the present disclosure in conjunction with the specific implementations, and specific implementations of the present disclosure shall not be deemed as being limited to these descriptions. A person having ordinary skills in the art may make several simple derivations or replacements without departing from the conception of the present disclosure. The scope of protection is defined by the attached claims.

**Claims**

1. An adaptive modulation control method, comprising:

    controlling (S102), in response to a real terminal being in a first signal transmission mode, a modulation and coding scheme, MCS, of the real terminal according to a first adaptive module control, AMC, policy; and enabling (S104), after a change of the signal transmission mode of the real terminal, a second AMC policy conforming to a second signal transmission mode after the change to control the MCS of the real terminal; wherein an outer-loop policy of the first AMC policy is determined on the basis of a first target block error ratio, BLER, while an outer-loop policy of the second AMC policy is determined on the basis of a second target BLER; **characterised in that**:
    the real terminal is a physical terminal, and the change of the signal transmission mode of the real terminal comprises at least one of the following:

        the signal transmission mode of the real terminal is switched between a non-beamforming mode and a beamforming mode;
        the signal transmission mode of the real terminal is switched between a non-space division multiplexing access, SDMA, mode and an SDMA mode; and
        the real terminal exits from one space division group and joins another space division group.

2. The adaptive modulation control method of claim 1, wherein after the change of the signal transmission mode of the real terminal, the adaptive modulation control method further comprises:

    suspending the first AMC policy, and enabling a failure timer corresponding to the first AMC policy; and
    re-enabling, in response to the signal transmission mode of the real terminal being restored to the first signal transmission mode before the failure timer expires, the first AMC policy to control the MCS of the real terminal, and resetting the failure timer.

3. The adaptive modulation control method of claim 2, further comprising:
   terminating, in response to the signal transmission mode of the real terminal being yet not restored to the first signal transmission mode until the failure time expires, the first AMC policy.

4. An adaptive modulation control method, comprising:

controlling (S102), in response to a virtual terminal being in a first signal transmission mode, a modulation and coding scheme, MCS, of the virtual terminal according to a first adaptive module control, AMC, policy; and enabling (S 104), after a change of the signal transmission mode of the virtual terminal, a second AMC policy conforming to a second signal transmission mode after the change to control the MCS of the virtual terminal; wherein an outer-loop policy of the first AMC policy is determined on the basis of a first target block error ratio, BLER, while an outer-loop policy of the second AMC policy is determined on the basis of a second target BLER; and

wherein the virtual terminal is formed by all terminals in an N-stream space division group as a whole, where N is a greater than or equal to 2; and the AMC policy corresponding to the virtual terminal is shared by the terminals in the N-stream space division group.

5. The adaptive modulation control method of claim 4, wherein after the change of the signal transmission mode of the virtual terminal, the adaptive modulation control method further comprises:

suspending the first AMC policy, and enabling a failure timer corresponding to the first AMC policy; and re-enabling, in response to the signal transmission mode of the virtual terminal being restored to the first signal transmission mode before the failure timer expires, the first AMC policy to control the MCS of the virtual terminal, and resetting the failure timer.

6. The adaptive modulation control method of claim 5, further comprising:
terminating, in response to the signal transmission mode of the virtual terminal being yet not restored to the first signal transmission mode until the failure time expires, the first AMC policy.

7. The adaptive modulation control method of any one of claims 4 to 6, wherein the change of the signal transmission mode of the terminal comprises any one of the following:

a number N of streams in the N-stream space division group is changed; and the number N of streams in the N-stream space division group is not changed, but a number of terminals changed in the N-stream space division group reaches a preset change ratio.

8. The adaptive modulation control method of any one of claims 4 to 6, wherein the AMC policy corresponding to the virtual terminal is determined on the basis of a real BLER mean of the virtual terminal, and the real BLER mean is a mean value of real BLERs of the terminals in the N-stream space division group.

9. The adaptive modulation control method of any one of claims 4 to 6, further comprising:

acquiring, for the AMC policy corresponding to the virtual terminal, a real BLER mean of the virtual terminal at a current moment n, wherein the real BLER mean is a mean value of real BLERs of the terminals in the N-stream space division group; and
correcting, on the basis of the real BLER mean and the target BLER of the AMC policy, inter-stream interference used at a next moment n+1 in an inner-loop policy of the AMC policy.

10. The adaptive modulation control method of claim 9, wherein the correcting, on the basis of the real BLER mean and the target BLER of the AMC policy, inter-stream interference used at a next moment n+1 in an inner-loop policy of the AMC policy comprises: correcting the inter-stream interference used at the next moment in the inner-loop policy of the AMC policy according to the following formula:

$$\text{Interf}_{\text{SDMA-N}}(n + 1) = \text{Interf}_{\text{SDMA-N}}(n) + \rho \cdot (\text{BLER}_{\text{real}} - \text{BLER}_{\text{target}}),$$

where $\text{Interf}_{\text{SDMA-N}}(n+1)$ denotes the inter-stream interference at the next moment, $\text{Interf}_{\text{SDMA-N}}(n)$ denotes the inter-stream interference at the current moment, the $\text{BLER}_{\text{real}}$ denotes the real BLER mean, the $\text{BLER}_{\text{target}}$ denotes the target BLER of the AMC policy, and $\rho$ denotes an adjustment step factor and has a value range of $0 < \rho \leq 1$.

11. An adaptive modulation control apparatus (40), comprising:

a first modulation and coding scheme, MCS, control module (402), configured to control, in response to a real terminal being in a first signal transmission mode, an MCS of the real terminal according to a first adaptive module control, AMC, policy, wherein an outer-loop policy of the first AMC policy is determined on the basis of a first target block error ratio, BLER; and

a second MCS control module (404), configured to enable, after a change of the signal transmission mode of the real terminal, a second AMC policy conforming to a second signal transmission mode after the change to control the MCS of the real terminal, wherein an outer-loop policy of the second AMC policy is determined on the basis of a second target BLER;

**characterised in that**:

the real terminal is a physical terminal, and the change of the signal transmission mode of the real terminal comprises at least one of the following:

the signal transmission mode of the real terminal is switched between a non-beamforming mode and a beamforming mode;

the signal transmission mode of the real terminal is switched between a non-space division multiplexing access, SDMA, mode and an SDMA mode; and

the real terminal exits from one space division group and joins another space division group.

12. An adaptive modulation control apparatus (40), comprising:

a first modulation and coding scheme, MCS, control module (402), configured to control, in response to a virtual terminal being in a first signal transmission mode, an MCS of the virtual terminal according to a first adaptive module control, AMC, policy, wherein an outer-loop policy of the first AMC policy is determined on the basis of a first target block error ratio, BLER; and

a second MCS control module (404), configured to enable, after a change of the signal transmission mode of the virtual terminal, a second AMC policy conforming to a second signal transmission mode after the change to control the MCS of the virtual terminal, wherein an outer-loop policy of the second AMC policy is determined on the basis of a second target BLER;

wherein the virtual terminal is formed by all terminals in an N-stream space division group as a whole, where N is a greater than or equal to 2; and the AMC policy corresponding to the virtual terminal is shared by the terminals in the N-stream space division group.

13. A base station, comprising a processor (51), a memory (52) and a communication bus (53), wherein:

the communication bus (53) is configured to implement communication between the processor (51) and the memory (52); and

the processor (51) is configured to execute one or more programs stored in the memory (52) to perform the steps of the adaptive modulation control method of any one of claims 1 to 10.

14. A storage medium storing one or more programs which, when executed by one or more processors, cause the one or more processors to perform steps of the adaptive modulation control method of any one of claims 1 to 10.

**Patentansprüche**

1. Adaptives Modulationssteuerungsverfahren, umfassend:

Steuern (S102), als Reaktion darauf, dass ein reales Endgerät in einem ersten Signalübertragungsmodus ist, eines Modulations- und Kodierungsschemas, MCS, des realen Endgeräts gemäß einer ersten Strategie für adaptive Modulsteuerung, AMC; und

Aktivieren (S104), nach einer Änderung des Signalübertragungsmodus des realen Endgeräts, einer zweiten AMC-Strategie, die einem zweiten Signalübertragungsmodus nach der Änderung entspricht, um das MCS des realen Endgeräts zu steuern;

wobei eine Outside-Loop-Strategie der ersten AMC-Strategie basierend auf einem ersten Ziel-Blockfehlerverhältnis, BLER, bestimmt wird, während eine Outside-Loop-Strategie der zweiten AMC-Strategie basierend auf einem zweiten Ziel-BLER bestimmt wird; **dadurch gekennzeichnet, dass**:

das reale Endgerät ist ein physikalisches Endgerät, und die Änderung des Signalübertragungsmodus des realen Endgeräts mindestens eines der Folgenden umfasst:

der Signalübertragungsmodus des realen Endgeräts wird zwischen einem nichtstrahlformenden Modus und einem strahlformenden Modus umgeschaltet;
der Signalübertragungsmodus des realen Endgeräts wird zwischen einem Modus für Nicht-Raummultiplexzugriff, SDMA, und einem SDMA-Modus umgeschaltet; und
das reale Endgerät verlässt eine Raumgruppe und schließt sich einer anderen Raumgruppe an.

**2.** Adaptives Modulationssteuerungsverfahren nach Anspruch 1, wobei nach der Änderung des Signalübertragungsmodus des realen Endgeräts das adaptive Modulationssteuerungsverfahren ferner Folgendes umfasst:

Aussetzen der ersten AMC-Strategie und Aktivieren eines Ausfallzeitgebers, der der ersten AMC-Strategie entspricht; und
erneutes Aktivieren, als Reaktion darauf, dass der Signalübertragungsmodus des realen Endgeräts in den ersten Signalübertragungsmodus zurückgesetzt wird, bevor der Ausfallzeitgeber abläuft, der ersten AMC-Strategie, um das MCS des realen Endgeräts zu steuern, und Zurücksetzen des Ausfallzeitgebers.

**3.** Adaptives Modulationssteuerungsverfahren nach Anspruch 2, ferner umfassend:
Beenden, als Reaktion darauf, dass der Signalübertragungsmodus des realen Endgeräts noch nicht wieder in den ersten Signalübertragungsmodus zurückgesetzt wurde, der ersten AMC-Strategie, bis die Ausfallzeit abgelaufen ist.

**4.** Adaptives Modulationssteuerungsverfahren, umfassend:

Steuern (S 102), als Reaktion darauf, dass ein virtuelles Endgerät in einem ersten Signalübertragungsmodus ist, eines Modulations- und Kodierungsschemas, MCS, des virtuellen Endgeräts gemäß einer ersten Strategie für adaptive Modulsteuerung, AMC; und
Aktivieren (S104), nach einer Änderung des Signalübertragungsmodus des virtuellen Endgeräts, einer zweiten AMC-Strategie, die einem zweiten Signalübertragungsmodus nach der Änderung entspricht, um das MCS des virtuellen Endgeräts zu steuern;
wobei eine Outside-Loop-Strategie der ersten AMC-Strategie basierend auf einem ersten Ziel-Blockfehlerverhältnis, BLER, bestimmt wird, während eine Outside-Loop-Strategie der zweiten AMC-Strategie basierend auf einem zweiten Ziel-BLER bestimmt wird; und
wobei das virtuelle Endgerät von allen Endgeräten in einer N-Strom-Raumgruppe als Ganzes gebildet wird, wobei N größer als oder gleich wie 2 ist; und die AMC-Strategie, die dem virtuellen Endgerät entspricht, von den Endgeräten in der N-Strom-Raumgruppe gemeinsam genutzt wird.

**5.** Adaptives Modulationssteuerungsverfahren nach Anspruch 4, wobei nach der Änderung des Signalübertragungsmodus des virtuellen Endgeräts das adaptive Modulationssteuerungsverfahren ferner Folgendes umfasst:

Aussetzen der ersten AMC-Strategie und Aktivieren eines Ausfallzeitgebers, der der ersten AMC-Strategie entspricht; und
erneutes Aktivieren, als Reaktion darauf, dass der Signalübertragungsmodus des virtuellen Endgeräts in den ersten Signalübertragungsmodus zurückgesetzt wird, bevor der Ausfallzeitgeber abläuft, der ersten AMC-Strategie, um das MCS des virtuellen Endgeräts zu steuern, und Zurücksetzen des Ausfallzeitgebers.

**6.** Adaptives Modulationssteuerungsverfahren nach Anspruch 5, ferner umfassend:
Beenden, als Reaktion darauf, dass der Signalübertragungsmodus des virtuellen Endgeräts noch nicht wieder in den ersten Signalübertragungsmodus zurückgesetzt wurde, der ersten AMC-Strategie, bis die Ausfallzeit abgelaufen ist.

**7.** Adaptives Modulationssteuerungsverfahren nach einem der Ansprüche 4 bis 6, wobei die Änderung des Signalübertragungsmodus des Endgeräts ein beliebiges der Folgenden umfasst:

eine Anzahl N von Strömen in der N-Strom-Raumgruppe wird geändert; und
die Anzahl N von Strömen in der N-Strom-Raumgruppe wird nicht geändert, aber die Anzahl der geänderten Endgeräte in der N-Strom-Raumgruppe erreicht ein voreingestelltes Änderungsverhältnis.

**8.** Adaptives Modulationssteuerungsverfahren nach einem der Ansprüche 4 bis 6, wobei die AMC-Strategie, die dem virtuellen Endgerät entspricht, basierend auf einem realen BLER-Mittelwert des virtuellen Endgeräts bestimmt wird, und der reale BLER-Mittelwert ein Mittelwert der realen BLERs der Endgeräte in der N-Strom-Raumgruppe ist.

9. Adaptives Modulationssteuerungsverfahren nach einem der Ansprüche 4 bis 6, ferner umfassend:

Erfassen, für die AMC-Strategie, die dem virtuellen Endgerät entspricht, eines realen BLER-Mittelwerts des virtuellen Endgeräts zu einem aktuellen Zeitpunkt n, wobei der reale BLER-Mittelwert ein Mittelwert der realen BLERs der Endgeräte in der N-Strom-Raumgruppe ist; und
Korrigieren, basierend auf dem realen BLER-Mittelwert und dem BLER-Zielwert der AMC-Strategie, der Interferenz zwischen Strömen, die zu einem nächsten Zeitpunkt n+1 in einer Inner-Loop-Strategie der AMC-Strategie verwendet wird.

10. Adaptives Modulationssteuerungsverfahren nach Anspruch 9, wobei das Korrigieren, basierend auf dem realen BLER-Mittelwert und dem Ziel-BLER der AMC-Strategie, der Interferenz zwischen Strömen, die zu einem nächsten Zeitpunkt n+1 in einer Inner-Loop-Strategie der AMC-Strategie verwendet wird, Folgendes umfasst: Korrigieren der Interferenz zwischen Strömen, die zu dem nächsten Zeitpunkt in der Inner-Loop-Strategie der AMC-Strategie verwendet wird, gemäß der folgenden Formel:

$$\text{Interf}_{SDMA\_N}(n + 1) = \text{Interf}_{SDMA\_N}(n) + p \cdot (\text{BLER}_{real} - \text{BLER}_{Ziel}),$$

wobei $\text{Interf}_{SDMA-N}(n+1)$ die Interferenz zwischen Strömen zum nächsten Zeitpunkt bezeichnet, $\text{Interf}_{SDMA-N}(n)$ die Interferenz zwischen Strömen zum aktuellen Zeitpunkt bezeichnet, $\text{BLER}_{real}$ den realen BLER-Mittelwert bezeichnet, $\text{BLER}_{Ziel}$ die Ziel-BLER der AMC-Strategie bezeichnet und p einen Anpassungsschrittfaktor mit einem Wertebereich von $0<p<1$ bezeichnet.

11. Adaptives Modulationssteuerungsverfahren (40), umfassend:

ein erstes Steuermodul für Modulations- und Kodierungsschema, MCS, (402), das konfiguriert ist, um als Reaktion darauf, dass ein reales Endgerät in einem ersten Signalübertragungsmodus ist, ein MCS des realen Endgeräts gemäß einer ersten Richtlinie für adaptive Modulsteuerung, AMC, zu steuern, wobei eine Outer-Loop-Richtlinie der ersten AMC-Richtlinie basierend auf einem ersten Ziel-Blockfehlerverhältnis, BLER, bestimmt wird; und
ein zweites MCS-Steuermodul (404), das konfiguriert ist, um nach einer Änderung des Signalübertragungsmodus des realen Endgeräts, eine zweite AMC-Richtlinie, die einem zweiten Signalübertragungsmodus nach der Änderung entspricht, zu aktivieren, um das MCS des realen Endgeräts zu steuern; wobei eine Outside-Loop-Strategie der zweiten AMC-Strategie basierend auf einem zweiten Ziel-BLER bestimmt wird; und
dadurch gekennzeichnet, dass:
das reale Endgerät ist ein physikalisches Endgerät, und die Änderung des Signalübertragungsmodus des realen Endgeräts mindestens eines der Folgenden umfasst:

der Signalübertragungsmodus des realen Endgeräts wird zwischen einem nichtstrahlformenden Modus und einem strahlformenden Modus umgeschaltet;
der Signalübertragungsmodus des realen Endgeräts wird zwischen einem Modus für Nicht-Raummultiplexzugriff, SDMA, und einem SDMA-Modus umgeschaltet; und
das reale Endgerät verlässt eine Raumgruppe und schließt sich einer anderen Raumgruppe an.

12. Adaptive Modulationssteuerungsvorrichtung (40), umfassend:

ein erstes Steuermodul für Modulations- und Kodierungsschema, MCS, (402), das konfiguriert ist, um als Reaktion darauf, dass ein virtuelles Endgerät in einem ersten Signalübertragungsmodus ist, ein MCS des virtuellen Endgeräts gemäß einer ersten Strategie für adaptive Modulsteuerung, AMC, zu steuern, wobei eine Outer-Loop-Strategie der ersten AMC-Strategie basierend auf einem ersten Ziel-Blockfehlerverhältnis, BLER, bestimmt wird; und
ein zweites MCS-Steuermodul (404), das konfiguriert ist, um nach einer Änderung des Signalübertragungsmodus des virtuellen Endgeräts, eine zweite AMC-Strategie, die einem zweiten Signalübertragungsmodus nach der Änderung entspricht, zu aktivieren, um das MCS des virtuellen Endgeräts zu steuern; wobei eine Outside-Loop-Strategie der zweiten AMC-Strategie basierend auf einem zweiten Ziel-BLER bestimmt wird; und
wobei das virtuelle Endgerät von allen Endgeräten in einer N-Strom-Raumgruppe als Ganzes gebildet wird, wobei N größer als oder gleich wie 2 ist; und die AMC-Strategie, die dem virtuellen Endgerät entspricht, von den Endgeräten in der N-Strom-Raumgruppe gemeinsam genutzt wird.

**13.** Basisstation, umfassend einen Prozessor (51), einen Speicher (52) und einen Kommunikationsbus (53), wobei:

der Kommunikationsbus (53) konfiguriert ist, um die Kommunikation zwischen dem Prozessor (51) und dem Speicher (52) zu implementieren; und
der Prozessor (51) konfiguriert ist, um ein oder mehrere in dem Speicher (52) gespeicherte Programme auszuführen, um die Schritte des adaptiven Modulationssteuerungsverfahrens nach einem der Ansprüche 1 bis 10 durchzuführen.

**14.** Speichermedium, das ein oder mehrere Programme speichert, die, wenn sie von einem oder mehreren Prozessoren ausgeführt werden, den einen oder die mehreren Prozessoren veranlassen, Schritte des adaptiven Modulationssteuerungsverfahrens nach einem der Ansprüche 1 bis 10 durchzuführen.

**Revendications**

**1.** Procédé de commande de modulation adaptative, comprenant :

la commande (S102), en réponse à un terminal réel se trouvant dans un premier mode de transmission de signal, d'un schéma de modulation et de codage, MCS, du terminal réel selon une première politique de commande de module adaptatif, AMC ; et
l'activation (S104), après un changement du mode de transmission de signal du terminal réel, d'une seconde politique AMC conforme à un second mode de transmission de signal après le changement pour commander le MCS du terminal réel ;
une politique de boucle externe de la première politique AMC étant déterminée sur la base d'un premier taux d'erreur sur les blocs cible, BLER, pendant qu'une politique de boucle externe de la seconde politique AMC est déterminée sur la base d'un second BLER cible ; **caractérisé en ce que** :
le terminal réel est un terminal physique, et le changement du mode de transmission de signal du terminal réel comprend au moins l'un des suivants :

le mode de transmission de signal du terminal réel est commuté entre un mode sans formation de faisceau et un mode de formation de faisceau ;
le mode de transmission de signal du terminal réel est commuté entre un mode de non accès par multiplexage à répartition spatial, SDMA, et un mode SDMA ; et
le terminal réel sort d'un groupe de répartition spatiale et rejoint un autre groupe de répartition spatiale.

**2.** Procédé de commande de modulation adaptative de la revendication 1, après le changement du mode de transmission de signal du terminal réel, ledit procédé de commande de modulation adaptative comprenant en outre :

la suspension de la première politique AMC et l'activation d'un temporisateur de défaillance correspondant à la première politique AMC ; et
la réactivation, en réponse à la restauration du mode de transmission de signal du terminal réel dans le premier mode de transmission de signal avant l'expiration du temporisateur de défaillance, de la première politique AMC pour commander le MCS du terminal réel, et la réinitialisation du temporisateur de défaillance.

**3.** Procédé de commande de modulation adaptative de la revendication 2, comprenant en outre :
la terminaison, en réponse au mode de transmission de signal du terminal réel qui n'est pas encore restauré dans le premier mode de transmission de signal jusqu'à l'expiration du temps de défaillance, de la première politique AMC.

**4.** Procédé de commande de modulation adaptative, comprenant :

la commande (S 102), en réponse à un terminal virtuel se trouvant dans un premier mode de transmission de signal, d'un schéma de modulation et de codage, MCS, du terminal virtuel selon une première politique de commande de module adaptatif, AMC ; et
l'activation (S104), après un changement du mode de transmission de signal du terminal virtuel, d'une seconde politique AMC conforme à un second mode de transmission de signal après le changement pour commander le MCS du terminal virtuel ;
une politique de boucle externe de la première politique AMC étant déterminée sur la base d'un premier rapport d'erreur sur les blocs cible, BLER, pendant qu'une politique de boucle externe de la seconde politique AMC est déterminée sur la base d'un second BLER cible ; et
ledit terminal virtuel étant formé par tous les terminaux d'un groupe de répartition spatiale à N flux sous la forme d'un ensemble, où N est supérieur ou égal à 2 ; et ladite politique AMC correspondant au terminal virtuel étant partagée par les terminaux du groupe de répartition spatiale à N flux.

5. Procédé de commande de modulation adaptative de la revendication 4, après le changement du mode de transmission de signal du terminal virtuel, le procédé de commande de modulation adaptative comprenant en outre :

la suspension de la première politique AMC et l'activation d'un temporisateur de défaillance correspondant à la première politique AMC ; et
la réactivation, en réponse à la restauration du mode de transmission de signal du terminal virtuel dans le premier mode de transmission du signal avant l'expiration du temporisateur de défaillance, de la première politique AMC pour commander le MCS du terminal virtuel, et la réinitialisation du temporisateur de défaillance.

6. Procédé de commande de modulation adaptative de la revendication 5, comprenant en outre :
la terminaison, en réponse au mode de transmission de signal du terminal virtuel qui n'est pas encore restauré dans le premier mode de transmission de signal jusqu'à l'expiration du temps de défaillance, de la première politique AMC.

7. Procédé de commande de modulation adaptative de l'une quelconque des revendications 4 à 6, ledit changement du mode de transmission de signal du terminal comprenant l'un quelconque des suivants :

un nombre N de flux dans le groupe de répartition spatiale de N flux étant modifié ; et
le nombre N de flux dans le groupe de répartition spatiale à N flux n'étant pas modifié, mais un nombre de terminaux modifiés dans le groupe de répartition spatiale à N flux atteint un rapport de modification prédéfini.

8. Procédé de commande de modulation adaptative de l'une quelconque des revendications 4 à 6, ladite politique AMC correspondant au terminal virtuel étant déterminée sur la base d'une moyenne BLER réelle du terminal virtuel, et ladite moyenne BLER réelle étant une valeur moyenne des BLER réels des terminaux dans le groupe de répartition spatiale à N flux.

9. Procédé de commande de modulation adaptative de l'une quelconque des revendications 4 à 6, comprenant en outre :

l'acquisition, pour la politique AMC correspondant au terminal virtuel, d'une moyenne BLER réelle du terminal virtuel à un instant actuel n, ladite moyenne BLER réelle étant une valeur moyenne des BLER réels des terminaux dans le groupe de répartition spatiale à N flux ; et
la correction, sur la base de la moyenne BLER réelle et du BLER cible de la politique AMC, de l'interférence inter-flux utilisée à un instant suivant n+1 dans une politique de boucle interne de la politique AMC.

10. Procédé de commande de modulation adaptative de la revendication 9, ladite correction, sur la base de la moyenne BLER réelle et du BLER cible de la politique AMC, de l'interférence inter-flux utilisée à un instant suivant n+1 dans une politique de boucle interne de la politique AMC comprenant : la correction de l'interférence inter-flux utilisée à l'instant suivant dans la politique de boucle interne de la politique AMC selon la formule suivante :

$$\text{Interf}_{SDMA\_N}(n+1) = \text{Interf}_{SDMA\_N}(n) + \rho \cdot (\text{BLER}_{réel} - \text{BLER}_{cible}),$$

où $\text{Interf}_{SDMA-N}(n+1)$ désigne l'interférence inter-flux à l'instant suivant, $\text{Interf}_{SDMA-N}(n)$ désigne l'interférence inter-flux à l'instant actuel, le $\text{BLER}_{réel}$ désigne la moyenne BLER réelle, le $\text{BLER}_{cibie}$ désigne le BLER cible de la politique AMC, et $\rho$ désigne un facteur d'étape de réglage et possède une plage de valeurs de $0 < \rho \le 1$.

11. Appareil de commande de modulation adaptative (40), comprenant :

un premier module de commande de schéma de modulation et de codage, MCS (402), configuré pour commander, en réponse à un terminal réel se trouvant dans un premier mode de transmission de signal, un MCS du terminal réel selon une première politique de commande de module adaptatif, AMC, une politique de boucle externe de la première politique AMC étant déterminée sur la base d'un premier taux d'erreur sur les blocs cible, BLER ; et

un second module de commande MCS (404), configuré pour activer, après un changement du mode de transmission de signal du terminal réel, une seconde politique AMC conforme à un second mode de transmission de signal après le changement pour commander le MCS du terminal réel, une politique de boucle externe de la seconde politique AMC étant déterminée sur la base d'un second BLER cible ;

**caractérisé en ce que** :

le terminal réel est un terminal physique, et le changement du mode de transmission de signal du terminal réel comprend au moins l'un des suivants :

le mode de transmission de signal du terminal réel est commuté entre un mode sans formation de faisceau et un mode de formation de faisceau ;
le mode de transmission de signal du terminal réel est commuté entre un mode de non accès par multiplexage à répartition spatial, SDMA, et un mode SDMA ; et
le terminal réel sort d'un groupe de répartition spatiale et rejoint un autre groupe de répartition spatiale.

12. Appareil de commande de modulation adaptative (40), comprenant :

un premier module de commande de schéma de modulation et de codage, MCS (402), configuré pour commander, en réponse à un terminal virtuel se trouvant dans un premier mode de transmission de signal, un MCS du terminal virtuel selon une première politique de commande de module adaptatif, AMC, une politique de boucle externe de la première politique AMC étant déterminée sur la base d'un premier taux d'erreur sur les blocs cible, BLER ; et
un second module de commande MCS (404), configuré pour activer, après un changement du mode de transmission de signal du terminal virtuel, une seconde politique AMC conforme à un second mode de transmission de signal après le changement pour commander le MCS du terminal virtuel, une politique de boucle externe de la seconde politique AMC étant déterminée sur la base d'un second BLER cible ;
ledit terminal virtuel étant formé par tous les terminaux d'un groupe de répartition spatiale à N flux sous la forme d'un ensemble, où N est supérieur ou égal à 2 ; et ladite politique AMC correspondant au terminal virtuel étant partagée par les terminaux du groupe de répartition spatiale à N flux.

13. Station de base, comprenant un processeur (51), une mémoire (52) et un bus de communication (53),

ledit bus de communication (53) étant configuré pour la mise en oeuvre d'une communication entre le processeur (51) et la mémoire (52) ; et
ledit processeur (51) étant configuré pour exécuter un ou plusieurs programmes stockés dans la mémoire (52) afin de réaliser les étapes du procédé de commande de modulation adaptative de l'une quelconque des revendications 1 à 10.

14. Support de stockage stockant un ou plusieurs programmes qui, lorsqu'ils sont exécutés par un ou plusieurs processeurs, amènent le ou les processeurs à réaliser des étapes du procédé de commande de modulation adaptative de l'une quelconque des revendications 1 à 10.

control an MCS of a terminal according to a first
AMC policy when the terminal is in a first signal
transmission mode ⌒ S102

enable a second AMC policy to control the MCS
of the terminalafter a change of the signal
transmission mode of the terminal ⌒ S104

FIG. 1

start

a base station accepts the access of UE1 — S202

the base station uses AMC policy c1 to control the MCS of UE1 — S204

determine whether UE1 enters an N-stream SDMA mode — S206

N

Y

the base station uses AMC policy c2 to control the MCS of UE1, and meanwhile suspends AMC policy c1 and enables timer1 — S208

the base station determines whether UE1 returns to the non-SDMA mode — S210

N

Y

the base station resets timer1 — S212

the base station determines whether timer 1 expires — S214

N

Y

the base station terminates AMC policy c1 — S216

end

FIG. 2

start

a base station controls the MCS of a virtual
terminal a formed by an N-stream space
division group according to AMC policy c3 — S302

determine whether
the number of streams in the
N-stream space division group
is changed — S304

Y

the base station
resets timer3 — S312

the MCS of the virtual terminal b is controlled by
AMC policy c4, and meanwhile AMC policy c3 is
suspended and timer3 is enabled — S308

N

whether
the number of
terminals changed in the N-stream
space division group reaches
a preset change
ratio — S306

N

the base station
resets timer3 — S322

Y

the MCS of the virtual terminal a' is controlled by
AMC policy c3', and meanwhile AMC policy c3 is
suspended and timer3 is enabled — S318

Y

the base
station determines whether
the virtual terminal a
appears again — S310

N   N

the base station
determines whether the virtual
terminal a appears again — S320

Y

N

the base
station determines whether
timer3 expires — S314

N

the base station
determines whether timer3 expires — S324

Y

Y

the base station terminates
AMC policy c3 — S316

the base station terminates
AMC policy c3 — S326

end

FIG. 3

first MCS control module —— 402

second MCS control module —— 404

adaptive modulation control apparatus

40

FIG. 4

50

processor —— 51

memory —— 52

—— 53

FIG. 5

**EP 3 989 465 B1**

**REFERENCES CITED IN THE DESCRIPTION**

**Patent documents cited in the description**

- WO 2011093756 A1
- WO 2009035382 A1